# EUROPEAN PATENT SPECIFICATION

(11) **EP 2 622 281 B1**
(45) Date of publication and mention of the grant of the patent: **27.03.2019**
(21) Application number: 11829598.9
(22) Date of filing: 29.09.2011
(51) Int. Cl.: F24H 1/20, F24H 9/20, F28D 20/00

(54) **HOT WATER TANK HAVING OVERHEATING PREVENTION FUNCTION**
WARMWASSERSPEICHER MIT ÜBERHITZUNGSSCHUTZFUNKTION
RÉSERVOIR D'EAU CHAUDE PRÉSENTANT UNE FONCTION ANTI-SURCHAUFFE

(30) Priority: 22.09.2011 KR 20110095930; 30.09.2010 KR 20100095452
(43) Date of publication of application: 07.08.2013
(73) Proprietor: Coway Co., Ltd., Chungcheongnam-do 314-895 (KR)
(72) Inventor: KIM, Dong-Eun, Seoul 151-851 (KR); NOH, Jin-Hwan, Seoul 151-851 (KR)
(74) Representative: Nederlandsch Octrooibureau
(86) International application number: PCT/KR2011/007198
(87) International publication number: WO 2012/044092

(56) References cited:
- EP-A2- 2 233 858
- WO-A1-95/30324
- DE-A1- 1 950 411
- KR-A- 20020 083 282
- KR-A- 20050 060 644
- KR-A- 20050 067 992
- KR-A- 20070 001 641
- KR-B1- 100 864 765
- US-B1- 6 242 720
- US-B1- 6 363 216
- US-B1- 6 834 160

## Description

### [Technical Field]

The present invention relates to a hot water tank provided in purifiers, water heaters, bidets, or boilers to store hot water, and more particularly, to a hot water tank capable of stably preventing overheating.

### [Background Art]

Purifiers, water heaters, bidets, or boilers are provided with a hot water tank for keeping and storing hot water so as to provide users with hot water having a temperature higher than room temperature.

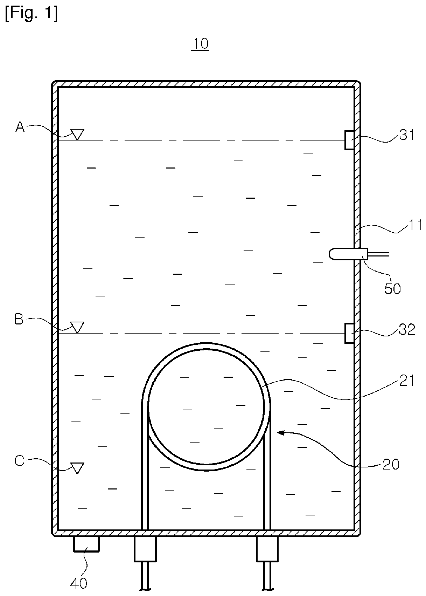

FIG. 1 shows a conventional hot water tank.

As shown in FIG. 1, a conventional hot water tank 10 includes a tank body 11 and a heating unit 20. The tank body 11 is provided with a water inlet port (not shown) through which raw water flows in, a water outlet port (not shown), and an internal space for storing water. The heating unit 20 heats water stored in the tank body 11. Various types of heating unit 20 are known in the art. As shown in FIG. 1, a sheath heater, which generates heat while being in direct contact with water stored in the tank body 11, is widely used.

In order to adjust a water level of the tank body 11, the conventional hot water tank 10 includes a full water level sensor 31 sensing a full water level A, and a low water level sensor 32 sensing a low water level B. The full water level sensor 31 is provided to prevent water from being supplied to the tank body 11 beyond the full water level A, and the low water level sensor 32 is provided to supply additional water to the tank body 11 when water stored in the tank body 11 falls below a certain water level (that is, the low water level B).

In addition, the conventional hot water tank 10 includes a temperature sensor 50 and an overheating preventer 40. The temperature sensor 50 measures a temperature of water stored in the tank body 11. The overheating preventer 40 prevents the heating unit 20 from being overheated through a breakdown of the water level sensors 31 and 32 or the temperature sensor 50 or through a controller (not shown) malfunction. That is, although the controller (not shown) controls the heating operation of the heating unit 20, based on a temperature sensed by the temperature sensor 50, the overheating preventer 40 forcibly cuts power supplied to the heating unit 20 when the power supplied to the heating unit 20 is not cut by a breakdown of the water level sensors 31 and 32 or the temperature sensor 50 or by a controller (not shown) malfunction.

The overheating preventer 40 may use a bimetal, which, when heated above a set temperature, may automatically or mechanically cut the power supplied to the heating unit 20. Thus, the operation of the heating unit 20 may be stably controlled even when the temperature sensor 50 or the like malfunctions.

For example, in the case of the hot water tank 10 shown in FIG. 1, if a water level of the tank body 11 is in a range between the full water level A and the low water level B, and the heating unit 20 is overheated, such that the temperature of hot water rises above a reaction temperature (a set temperature) of the overheating preventer 40 (for example, approximately around 90°C), the overheating preventer 40 installed in a lower portion of the tank body 11 operates to cut the power supplied to the heating unit 20. However, a water level of the tank body 11 may be lowered below the low water level B in the case that the low water level sensor 32 does not sense the low water level B due to a malfunction, or when additional water is not supplied to the tank body 11 due to the supply of raw water being cut.

Specifically, due to the continuous outflow of water, a water level of hot water may be lowered below a centralized heating part 21 of a sheath heater used as the heating unit 20, that is, a coiled part thereof.

As such, if the heating unit 20 continues to operate when hot water is at or around a water level C below the centralized heating part 21, heat from the heating unit 20 is not transferred to water, but is mostly transferred to air existing above the water level C. In this case, water below the water level C performs a heat insulating function between air heated by the heating unit 20 and the overheating preventer 40, and thus, a temperature rise in the overheating preventer 40 is prevented or slowed down. That is, since air above the water level C may be heated to a temperature much higher than the boiling point of water by heat from the heating unit 20, a surface temperature of the tank body 11 coming into contact with air is increased. On the other hand, water at the water level C evaporates only from the surface thereof, while water below the surface disturbs a heat transfer between high temperature air and the overheating preventer 40.

Therefore, in the case of the conventional hot water tank 10 shown in FIG. 1, having an overheating preventer 40 installed in a lower portion of the tank body 11, if hot water is at a water level C, below the centralized heating part 21, the hot water tank 10 may be overheated for a significantly long period of time. Hence, the overheating prevention function is not effectively performed, which may lead to a dangerous situation, such as a fire.

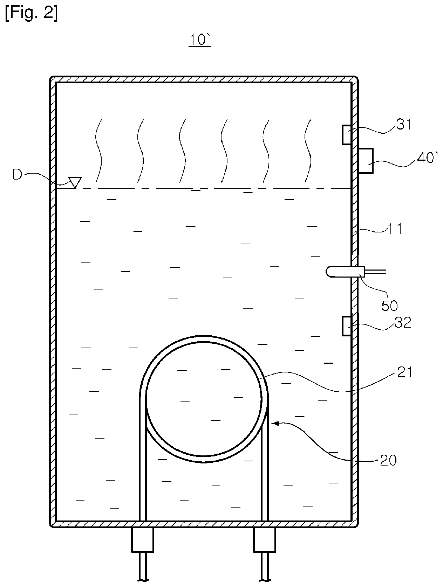

Meanwhile, as shown in FIG. 2, a hot water tank 10' may include an overheating preventer 40' installed on an upper side of a tank body 11.

The overheating preventer 40' is installed between a full water level and a low water level, that is, a level at which water is not always maintained. Therefore, the overheating preventer 40' is not configured such that it directly reacts to heat transfer according to a temperature of water. Also, a reaction temperature or a set temperature (for example, approximately around 105°C) is set such that the overheating preventer 40' reacts to a heat transfer according to a temperature of steam.

Therefore, the hot water tank 10' shown in FIG. 2 is configured to cut power supplied to a heating unit 20, when a temperature of a position at which the overheating preventer 40' is installed exceeds a reaction temperature due to overheating of the heating unit 20 and continuous evaporation of hot water, which may be caused by a breakdown of water level sensors 31 and 32 or a temperature sensor 50 or by a controller (not shown) malfunction.

However, the reaction temperature of the overheating preventer 40' is set such that the overheating preventer 40' functions to cut the power supplied at a temperature higher than the boiling point (100°C) of water. Therefore, the overheating preventer 40' does not operate until a water level is lowered to a level D below a position at which the overheating preventer 40' is installed. Consequently, steam may be continuously generated for a significant length of time, long enough for a water level to drop. Also, stream may be discharged to a water outlet part, such as an extraction cock, leading to an increase in the risk of burn injuries. Furthermore, the overheating preventer 40' may not effectively perform the overheating prevention function.

As described above, the conventional hot water tanks 10 and 10' shown in FIGS. 1 and 2 may not effectively perform the overheating prevention function, wherever the overheating preventers 40 and 40' are installed. Therefore, there is a need for a hot water tank capable of preventing overheating in a novel manner.

DE 19 50 411 A1 discloses an electric hot water heater with a radiator extending over at least part of the height of the container and a switching element acting on the circuit of the radiator, which is actuated by a temperature sensor guided in the immediate vicinity of the radiator.

US 6 363 216 B1 discloses a water heating having a water tank and multiple electric resistance heating elements extending into the water tank for heating water in the tank. The water heater was disclosed to include a proportional band temperature controller for controlling electric power to the electric resistance heating elements in bursts. Each burst of electric power is followed by a period during which the temperature controller does not conduct power to the electric resistance heating element. It discloses, that in an embodiment, each burst of electric power lasts for about 95% or less of a cycle comprised of one burst of electric power followed by the period during which the temperature controller does not conduct electric power. Further activation of the heating elements by the controller is carried out in a sequential or other timed or controlled fashion to permit uniform heating of the water in the tank. It further discloses bimetallic thermostats mechanically cutting power to a resistance heating element, when a set temperature is reached. EP 2 233 858 A2 discloses a warm water reservoir with sensor system. It discloses that a tank has a sensor system provided with temperature sensors connected in series in a sensor chain. A connection of one temperature sensor is attached to a connection of the other temperature sensor. The connection of the former temperature sensor and the connection of the latter temperature sensor of the sensor chain are disclosed to be connectable to a selection unit. The temperature sensors of the sensor chain are arranged in a sensor pipe. The sensor system is arranged in a heating flange.

US 6 242 720 B1 discloses a control for a water heater having upper and lower heating elements which assures that the upper heating element is not activated until certain control conditions are met. The control first determines whether the temperature sensed in the vicinity of the upper heating element has reached a predefined set point temperature for that sensor. The control thereafter determines whether the temperature sensed by the sensor declines at a rate greater or equal to a threshold rate of temperature change before authorizing any activation of the upper heating element.

### [Disclosure of Invention]

### [Technical Problem]

An aspect of the present invention provides a hot water tank capable of stably preventing overheating of a heating unit, without regard to a water level thereof.

An aspect of the present invention also provides a hot water tank capable of reacting to an overheating of a heating unit more sensitively.

### [Solution of Problem]

According to an aspect of the present invention, there is provided a hot water tank according to claim 1.

The first set temperature, reacted to by the upper overheating preventer, may be set to be higher than the second set temperature, reacted to by the lower overheating preventer.

The first set temperature may be higher than the boiling point of water, and the second set temperature may be lower than the boiling point of water.

The upper and lower overheating preventers may include a bimetal.

The hot water tank may further include: a full water level sensor installed on an upper side of the tank body to sense a full water level; and a low water level sensor provided on a lower side of the tank body to sense a low water level, wherein the upper overheating preventer is installed in a position lower than the full water level.

The heating unit may include a sheath heater that is provided inside the tank body and has a centralized heating part wound in a coiled shape.

The heating unit may include a band heater having a centralized heating part contacting an outer surface of the tank body.

The lower overheating preventer may be installed in a position lower than a bottom of the centralized heating part.

### [Advantageous Effects of Invention]

According to exemplary embodiments of the present invention, overheating prevention may be achieved by an upper overheating preventer when a hot water tank is at a low water level, and may be achieved by a lower overheating preventer when a hot water tank is at a high water level. Therefore, overheating may be prevented stably, without regard to the water level of the hot water tank.

In addition, the upper and lower heat preventers may react to an overheated state by heat transfer of water and steam (or overheated air) stored in the hot water tank. Therefore, a stable overheating prevention effect may be obtained, as compared to the conventional hot water tank that reacts to an overheated state by heat transfer from only one of water and steam (or overheated air).

Due to the stable overheating prevention, users may avoid a dangerous situation, such as fire, and energy consumption by overheating may be minimized.

### [Brief Description of Drawings]

FIG. 1 is a schematic diagram showing an example of a conventional hot water tank.
FIG. 2 is a schematic diagram showing another example of a conventional hot water tank.
FIG. 3 is a schematic diagram showing a hot water tank according to an exemplary embodiment of the present invention.
FIG. 4 is a schematic diagram showing a hot water tank according to another exemplary embodiment of the invention.
FIG. 5 is a circuit diagram showing an overheating preventer provided in a hot water tank, according to an exemplary embodiment of the present invention.

### [Best Mode for Carring out the Invention]

The terms used in the present application are merely used to describe particular embodiments, and are not intended to limit the present invention. An expression used in the singular encompasses the expression of the plural, unless it has a clearly different meaning in the context.

In the present application, it is to be understood that the terms such as "comprising", "including", "having", etc., are intended to indicate the existence of the features, numbers, operations, actions, components, parts, or combinations thereof disclosed in the specification, and are not intended to preclude the possibility that one or more other features, numbers, operations, actions, components, parts, or combinations thereof may exist or may be added.

Exemplary embodiments of the present invention will now be described in detail with reference to the accompanying drawings. The invention may, however, be embodied in many different forms and should not be construed as being limited to the embodiments set forth herein. To clearly describe the invention, descriptions of unrelated parts will be omitted, and like reference numerals are used to refer to like elements throughout the specification.

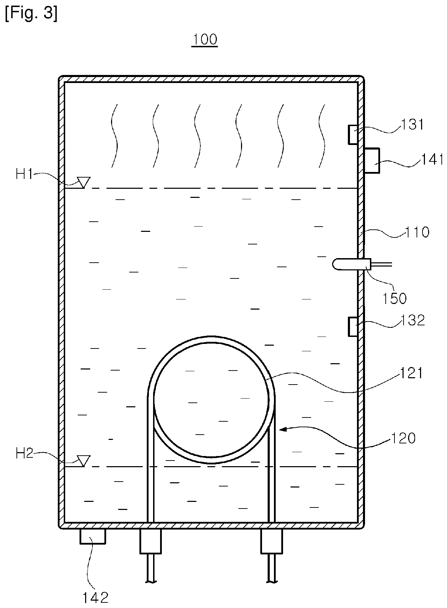

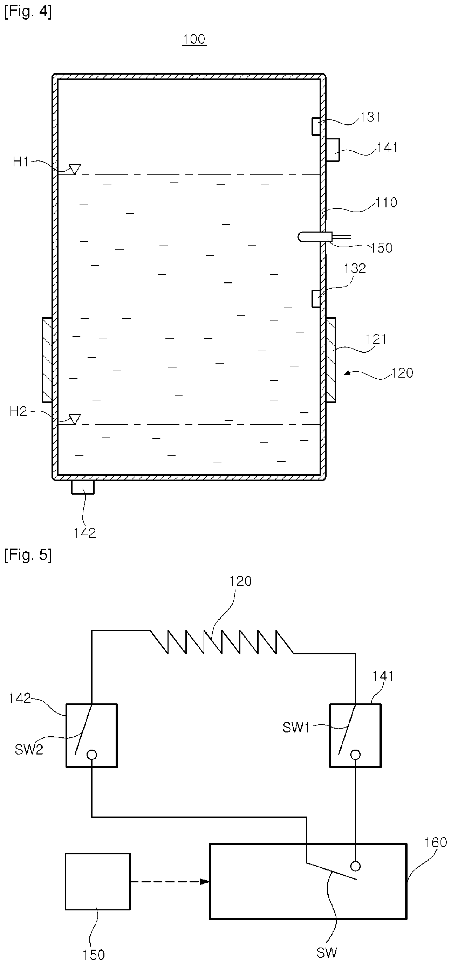

FIG. 3 is a schematic diagram showing a hot water tank according to an exemplary embodiment of the present invention. FIG. 4 is a schematic diagram showing a hot water tank according to another exemplary embodiment of the invention. FIG. 5 is a circuit diagram showing an overheating preventer provided in a hot water tank, according to an exemplary embodiment of the present invention.

A hot water tank 100 according to an exemplary embodiment of the present invention will be described below with reference to FIGS. 3 through 5.

Referring to FIGS. 3 and 4, a hot water tank 100 according to an exemplary embodiment of the present invention is configured to heat water and store heated water. The hot water tank 100 may include a tank body 111 and a heating unit 120. The tank body 111 has an internal space for storing water. The heating unit 120 is provided in the tank body 111 to heat water stored in the tank body 111. An overheating preventer 141 may be installed in an upper portion of the tank body 111, and an overheating preventer 142 may be installed in a lower portion of the tank body 111. The overheating preventers 141 and 142 prevent overheating of the heating unit 120. To be specific, the tank body 111 is provided with a water inlet port (not shown) through which raw water flows in, a water outlet port (not shown), and an internal space for storing water.

In addition, the heating unit 120 heats water stored in the tank body 111. As shown in FIG. 3, the heating unit 120 may include a sheath heater generating heat while being in direct contact with water stored in the tank body 111. As shown in FIG. 4, the heating unit 120 may include a band heater generating heat while being in contact with the outer surface of the tank body 111. In addition to the above-described configuration, the heating unit 120 used herein may be constructed with any known heating unit as long as it can heat water stored in the tank body 111.

The heating unit 111 may be supplied with power from a power source (not shown) installed on the outside of the hot water tank 100. The sheath heater may have a centralized heating part 121 that is coiled so that heating occurs intensively, and the band heater may have a centralized heating part 121 that is in direct contact with the outer surface of the tank body 111 so that heating occurs intensively.

The overheating preventers 141 and 142 may be provided with at least two overheating preventers, including an upper overheating preventer 141 provided in an upper portion of the tank body 111, and a lower overheating preventer 142 provided in a lower portion of the tank body 111. Therefore, the hot water tank 100 according to the exemplary embodiment of the present invention may cut power supplied to the heating unit 120 when either of the upper overheating preventer 141 and the lower overheating preventer 142 is heated to a set temperature or more, thereby achieving a stable overheating prevention.

Meanwhile, although the cases in which the single upper overheating preventer 141 and the single lower overheating preventer 142 are installed are shown in FIGS. 3 and 4, there is no specific limit to the number of the overheating preventers.

The hot water tank 100 according to the exemplary embodiment of the present invention may include a water level sensor and a temperature sensor as in the case of the conventional hot water tank.

Specifically, in order to adjust a water level of the tank body 111, the hot water tank 100 may be provided with a plurality of water level sensors, including a full water level sensor 131 sensing a full water level (A of FIG. 1), and a low water level sensor 132 sensing a low water level (B of FIG. 1). That is, one or more water level sensors may be additionally provided between the full water level sensor 131 and the low water level sensor 132.

The full water level sensor 131 is provided to prevent water from being supplied to the tank body 111 beyond the full water level (A of FIG. 1), and the low water level sensor 132 is provided to supply additional water to the tank body 111 when water stored in the tank body 111 falls below a certain water level (the low water level (B of FIG. 1)). In a case in which the hot water tank 100 is used as a pressure tank, the supply of water is controlled by a difference between a pressure of externally supplied water and an internal pressure of the tank body 111. Therefore, the water level sensors may not be provided. In addition, either of the full water level sensor 131 and the low water level sensor 132 may be used. For example, a float moving up and down by buoyant force may be used as the full water level sensor 131, and the low water level sensor 132 may not be installed.

The temperature sensor 150 measures a temperature of water stored in the tank body 111, and a controller (160 of FIG. 5) controls the operation of the heating unit 120, based on the water temperature sensed by the temperature sensor 150. In this manner, a temperature of hot water is controlled. The temperature sensor 150 may use a thermistor whose electrical resistance increases with a temperature rise; however, the temperature sensor 150 is not limited thereto.

If the heating unit 120 is overheated by a breakdown of the water level sensors 131 and 132 or the temperature sensor 150 or by a malfunction of the controller 160, the overheating preventers 141 and 142 may automatically cut power supplied to the heating unit 120.

The overheating preventers 141 and 142 provided in the hot water tank 100 according to the exemplary embodiment of the present invention will be described in a greater detail with reference to FIGS. 3 through 5.

As described above, the overheating preventers 141 and 142 are provided in the upper and lower portions of the tank body 111, respectively. The upper overheating preventer 141 cuts power supplied to the heating unit 120 when heated above a first set temperature (reaction temperature), and the lower overheating preventer 142 cuts power supplied to the heating unit 120 when heated above a second set temperature (reaction temperature).

The upper overheating preventer 141 and the lower overheating preventer 142 use a mechanical device, such as a bimetal, which releases electrical connection mechanically at the set reaction temperatures to cut the power supplied to the heating unit 120. Meanwhile, the lower overheating preventer 142 may be configured to react to heat transferred to the tank body 111 from hot water heated by the heating unit 120. In this consideration, the lower overheating preventer 142 may be installed in a lower portion of the tank body 111, for example, a position lower than a bottom of the centralized heating part 121, such that it reacts to heat transfer of hot water even though water stored in the tank body 111 is at a very low water level. In particular, the lower overheating preventer 142 may be installed in the bottom of the tank body 111, such that it reacts even at a very low water level. In this case, the second set temperature (reaction temperature) may be set to around 90°C, considering a temperature of heated hot water. The second set temperature (reaction temperature) may be changed according to an amount of heat transferred from hot water through the tank body 111 to the lower overheating preventer 142 or a material of the tank body 111.

Also, the upper overheating preventer 141 may be configured to react to heat transferred through the tank body 111 from steam or overheated air produced by the heating of the heating unit 120 and automatically cut power supplied to the heating unit 120. At this time, as shown in FIGS. 3 and 4, the upper overheating preventer 141 may be installed in a position below the full water level (A of FIG. 1), or may be installed in a position above the full water level. The upper overheating preventer 141 cuts power supplied to the heating unit 120 when water is continuously evaporated by overheating and thus a temperature of steam or air rises above the first set temperature (reaction temperature). The first set temperature may be set to approximately around 105°C, such that the upper overheating preventer 141 reacts to heat transferred by steam or air heated above the boiling point of water. The first set temperature may be changed according to an amount of heat transferred from heated steam (overheated air) through the tank body 111 to the upper overheating preventer 141 or a material of the tank body 111.

Since the first set temperature is set to a temperature reacted to by heated steam (overheated air), it is higher than the second set temperature reacted to by the overheated hot water.

That is, the first set temperature may be higher than the boiling point of water, and the second set temperature may be lower than the boiling point of water.

As shown in FIG. 5, the upper overheating preventer 141 and the lower overheating preventer 142 may be electrically connected in series to a circuit that supplies power to the heating unit 120. Therefore, the power supplied to the heating unit 120 may be cut when either of the upper overheating preventer 141 and the lower overheating preventer 142 exceeds the set temperature.

Specifically, the controller 160 turns on or off a switch SW to allow the power supplied to the heating unit 120 or cut the power supplied to the heating unit 120, based on a temperature value sensed by the temperature sensor 150. By the power supplied to the heating unit 120, the heating unit 120 heats water stored in the tank body 111. At this time, when the upper overheating preventer 141 exceeds the first set temperature due to the overheating of the heating unit 120, a first switch SW1 of the upper overheating preventer 141 is turned off to cut the power supplied to the heating unit 120. When the lower overheating preventer 142 exceeds the second set temperature due to the overheating of the heating unit 120, a second switch SW2 of the lower overheating preventer 142 is turned off to cut the power supplied to the heating unit 120.

When either of the upper overheating preventer 141 and the lower overheating preventer 142 exceeds the set temperature, the power supplied to the heating unit 120 may be cut, thereby preventing the overheating of the hot water tank 100.

As described above, the hot water tank 100 according to the exemplary embodiment of the invention may prevent overheating through the lower overheating preventer 142, which is installed in a lower portion of the tank body 111 to react to heat transfer from heated hot water, and the upper overheating preventer 141, which is installed in an upper portion of the tank body 111 to react to heat transfer from heated steam (overheated air) of the tank body 111. Therefore, the overheating may be rapidly prevented in any situation.

In the case of the conventional hot water tank 10 in which the overheating preventer 40 is installed only in the lower portion of the tank body 11, as shown in FIG. 1, overheating prevention may be insufficient in the lower water level C under the centralized heating part 21. However, the hot water tank of FIG. 3 according to the exemplary embodiment of the present invention may perform a stable overheating prevention at the lower water level H2 under the centralized heating part 121 since the upper overheating preventer 141 first reacts by heated steam (overheated air) of the water level H2.

In addition, in the case of the conventional hot water tank 10' in which the overheating preventer 40' is installed only in the upper portion of the tank body 11', as shown in FIG. 2, the overheating preventer 40' reacts after continuous evaporation of hot water until the installation height of the overheating preventer 40' becomes a region where heat is transferred by heated steam (overheated air). However, in the case of the hot water tank according to the exemplary embodiment of the present invention, as shown in FIG. 3, the lower overheating preventer 142 first reacts by heated hot water between the low water level H2 and the full water level. Therefore, an overheating prevention reaction speed becomes fast and unnecessary power consumption is minimized. Furthermore, as shown in FIG. 3, when the water level of hot water is maintained at a normal level H1 between the full water level and the low water level or maintained between the full water level and the lower water level, the lower overheating preventer 142 cuts power due to the overheating of hot water, and the upper overheating preventer 141 also cuts power due to the heated steam (air). Therefore, the overheating prevention stability may be maximized.

As described above, when power is supplied to the heating unit 120, based on a temperature value sensed by the temperature sensor 150, the hot water tank 120 according to the exemplary embodiment of the present invention may prevent overheating doubly by using the upper overheating preventer 141 and the lower overheating preventer 142, thereby achieving a stable overheating prevention.

While the present invention has been shown and described in connection with the exemplary embodiments, it will be apparent to those skilled in the art that modifications and variations can be made without departing from the spirit and scope of the invention as defined by the appended claims.

## Claims

1. A hot water tank having an overheating prevention function, comprising:
a tank body (111) having an internal space for storing water;
a heating unit (120) provided in the tank body (111) to heat water stored in the tank body (111);
an upper overheating preventer (141) provided in an upper portion of the tank body (111) to cut power supplied to the heating unit (120) mechanically when the upper overheating preventer (141) reaches a first set temperature or higher;
a lower overheating preventer (142) provided in a lower portion of the tank body (111) to cut the power supplied to the heating unit (120) mechanically when the lower overheating preventer (142) reaches a second set temperature or higher;
a temperature sensor (150) measuring a temperature of water stored in the tank body (111); and
a controller (160) controlling the power supplied to the heating unit (120), based on a value sensed by the temperature sensor (150),
wherein power supplied to the heating unit (120) is cut mechanically when either of the upper overheating preventer (141) and the lower overheating preventer (142) reaches the set temperature or higher,
and wherein the upper overheating preventer (141) and the lower overheating preventer (142) are electrically connected to a circuit for supplying power to the heating unit (120) in series, and supply of the power to the heating unit (120) is cut when either of the upper overheating preventer (141) and the lower overheating preventer (142) reaches the set temperature or higher.

2. The hot water tank of claim 1, wherein the first set temperature, reacted to by the upper overheating preventer (141) is set to be higher than the second set temperature, reacted to by the lower overheating preventer (142).

3. The hot water tank of claim 2, wherein the first set temperature is higher than the boiling point of water, and the second set temperature is lower than the boiling point of water.

4. The hot water tank of claim 1, wherein the upper and lower overheating preventers (141, 142) comprise a bimetal.

5. The hot water tank of claim 1, further comprising:
a full water level sensor (131) installed on an upper side of the tank body (111) to sense a full water level; and
a low water level sensor (132) provided on a lower side of the tank body (111) to sense a low water level,
wherein the upper overheating preventer (141) is installed in a position lower than the full water level (131).

6. The hot water tank of claim 1, wherein the heating unit (120) comprises a sheath heater that is provided inside the tank body (111) and has a centralized heating part (121) wound in a coiled shape.

7. The hot water tank of claim 1, wherein the heating unit (120) comprises a band heater having a centralized heating part (121) contacting an outer surface of the tank body (111).

8. The hot water tank of claim 6 or 7, wherein the lower overheating preventer (142) is installed in a position lower than a bottom of the centralized heating part (121).

## Patentansprüche

1. Heißwasserbehälter mit einer Überhitzungsschutzfunktion, der umfasst:
ein Behältergehäuse (111) mit einem Innenraum zum Speichern von Wasser;
eine in dem Behältergehäuse (111) bereitgestellte Heizeinheit (120), um in dem Behältergehäuse (111) gespeichertes Wasser aufzuheizen;
einen oberen Überhitzungsschutz (141), der in einem oberen Teil des Behältergehäuses (111) bereitgestellt wird, um die der Heizeinheit (120) zugeführte Energie mechanisch zu unterbrechen, wenn der obere Überhitzungsschutz (141) eine erste eingestellte Temperatur oder höher erreicht;
einen unteren Überhitzungsschutz (142), der in einem unteren Teil des Behältergehäuses (111) bereitgestellt wird, um die der Heizeinheit (120) zugeführte Energie mechanisch zu unterbrechen, wenn der untere Überhitzungsschutz (142) eine zweite eingestellte Temperatur oder höher erreicht;
einen Temperatursensor (150), der eine Temperatur des in dem Behältergehäuse (111) gespeicherten Wassers misst; und
eine Steuerung (160), die die der Heizeinheit (120) zugeführte Energie auf der Basis eines vom Temperatursensor (150) erfassten Wertes steuert,
wobei die der Heizeinheit (120) zugeführte Energie mechanisch unterbrochen wird, wenn entweder der obere Überhitzungsschutz (141) oder der untere Überhitzungsschutz (142) die eingestellte Temperatur oder höher erreicht,
und wobei der obere Überhitzungsschutz (141) und der untere Überhitzungsschutz (142) mit einer Schaltung, um der Heizeinheit (120) in Reihe Energie zuzuführen, elektrisch in Reihe verbunden sind und die Energiezufuhr für die Heizeinheit (120) unterbrochen wird, wenn entweder der obere Überhitzungsschutz (141) oder der untere Überhitzungsschutz (142) die eingestellte Temperatur oder höher erreicht.

2. Heißwasserbehälter nach Anspruch 1, wobei die erste eingestellte Temperatur, auf die der obere Überhitzungsschutz (141) reagiert, so eingestellt ist, dass sie höher ist als die zweite eingestellte Temperatur, auf die der untere Überhitzungsschutz (142) reagiert.

3. Heißwasserbehälter nach Anspruch 2, wobei die erste eingestellte Temperatur höher ist als der Siedepunkt von Wasser und die zweite eingestellte Temperatur niedriger ist als der Siedepunkt von Wasser.

4. Heißwasserbehälter nach Anspruch 1, wobei der obere und der untere Überhitzungsschutz (141, 142) ein Bimetall umfassen.

5. Heißwasserbehälter nach Anspruch 1, der des Weiteren umfasst:
einen Vollwasserstandsensor (131), der an einer oberen Seite des Behältergehäuses (111) installiert ist, um einen vollen Wasserstand zu erfassen; und
einen Niedrigwasserstandsensor (132), der an einer unteren Seite des Behältergehäuses (111) bereitgestellt wird, um einen niedrigen Wasserstand zu erfassen,
wobei der obere Überhitzungsschutz (141) an einer Position installiert ist, die niedriger ist als der volle Wasserstand (131).

6. Heißwasserbehälter nach Anspruch 1, wobei die Heizeinheit (120) eine Mantelheizung umfasst, die innerhalb des Behältergehäuses (111) bereitgestellt wird, und ein zentrales Heizteil (121) hat, das in einer Spulenform gewickelt ist.

7. Heißwasserbehälter nach Anspruch 1, wobei die Heizeinheit (120) ein Heizband mit einem zentralen Heizteil (121) umfasst, das mit einer äußeren Oberfläche des Behältergehäuses (111) in Kontakt ist.

8. Heißwasserbehälter nach Anspruch 6 oder 7, wobei der untere Überhitzungsschutz (142) an einer Position installiert ist, die niedriger ist als ein Boden des zentralen Heizteils (121).

## Revendications

1. Un réservoir d'eau chaude ayant une fonction de prévention de la surchauffe, comprenant :
• un corps de réservoir (111) ayant un espace interne pour stocker l'eau;
• une unité de chauffage (120) prévue dans le corps de réservoir (111) pour chauffer l'eau stockée dans le corps de réservoir (111);
• un élément en position haute de prévention de la surchauffe (141), prévu dans une partie supérieure du corps de réservoir (111) pour couper l'alimentation fournie mécaniquement à l'unité de chauffage (120) lorsque l'élément de prévention en position haute de la surchauffe (141) atteint ou dépasse une première température de consigne; et
• un élément en position basse de prévention de la surchauffe (142), prévu dans une partie inférieure du corps de réservoir (111) pour couper mécaniquement l'alimentation fournie à l'unité de chauffage (120) lorsque l'élément en position basse de prévention de la surchauffe (142), atteint ou dépasse une deuxième température de consigne,
• un capteur de température (150) mesurant une température de l'eau stockée dans le corps du réservoir (111); et
• un contrôleur (160) contrôlant la puissance fournie à l'unité de chauffage (120) basée sur une valeur détectée par le capteur de température (150),
dans lequel l'alimentation fournie à l'unité de chauffage (120) est mécaniquement coupée lorsque l'un ou l'autre des éléments en position haute de prévention de la surchauffe (141) et en position basse de prévention de la surchauffe (142) atteint ou dépasse la température de consigne,
et dans lequel l'élément en position haute de prévention de la surchauffe (141) et l'élément en position basse de prévention de la surchauffe (142) sont connectés électriquement à un circuit d'alimentation électrique de l'unité de chauffage (120) en série, et la puissance fournie à l'unité de chauffage (120) est coupée lorsque l'élément en position haute de prévention de la surchauffe (141) ou l'élément en position basse de prévention de la surchauffe (142) atteignent la température définie ou la dépasse.

2. Le réservoir d'eau chaude selon la revendication 1, dans lequel la première température de consigne à laquelle réagit l'élément en position haute de prévention de la surchauffe (141) est établie pour être supérieure à la seconde température de consigne à laquelle réagit l'élément en position basse de prévention de la surchauffe (142).

3. Le réservoir d'eau chaude selon la revendication 2, dans lequel la première température de consigne est supérieure au point d'ébullition de l'eau et la deuxième température de consigne est inférieure au point d'ébullition de l'eau.

4. Le réservoir d'eau chaude selon la revendication 1, dans lequel les éléments en position haute de prévention de la surchauffe (141) et en position basse de prévention de la surchauffe (142) comprennent un bimétal.

5. Le réservoir d'eau chaude selon la revendication 1, comprenant en outre :
- un capteur de niveau d'eau maximum (131) installé sur une face supérieure du corps de réservoir (111) pour détecter un niveau maximum de l'eau ; et
- un capteur de niveau d'eau minimum (132) disposé sur une face inférieure du corps de réservoir (111) pour détecter un niveau minimum de l'eau,
dans lequel l'élément en position haute de prévention de la surchauffe (141) est situé dans une position plus basse que le niveau d'eau maximum (131).

6. Le réservoir d'eau chaude selon la revendication 1, dans lequel l'unité de chauffage (120) comprend une unité de chauffage avec une gaine qui est disposé à l'intérieur du corps du réservoir (111) et comprend une partie de chauffage centralisée (121) enroulée en forme de spirale.

7. Le réservoir d'eau chaude selon la revendication 1, dans lequel l'unité de chauffage (120) comprend une unité de chauffage à bande chauffante comportant une partie chauffante centralisée (121) en contact avec une surface extérieure du corps du réservoir (111).

8. Le réservoir d'eau chaude selon la revendication 6 ou 7, dans lequel l'élément en position basse de prévention de la surchauffe, (142) est installé dans une position plus basse que la partie inférieure de la partie chauffante centralisée (121).
